(19) Europäisches Patentamt

European Patent Office

Office européen des brevets

(11) Numéro de publication: **0 243 245 B1**

(12) **FASCICULE DE BREVET EUROPEEN**

(45) Date de publication de fascicule du brevet: **15.04.92**   (51) Int. Cl.5: **F16L 11/08**, B29C 67/14

(21) Numéro de dépôt: **87400862.6**

(22) Date de dépôt: **15.04.87**

(54) **Nouveau tuyau flexible destiné à être utilisé à haute pression et son procédé de fabrication.**

(30) Priorité: **18.04.86 FR 8605629**

(43) Date de publication de la demande:
**28.10.87 Bulletin 87/44**

(45) Mention de la délivrance du brevet:
**15.04.92 Bulletin 92/16**

(84) Etats contractants désignés:
**DE ES GB IT**

(56) Documents cités:
EP-A- 0 148 099    BE-A- 843 521
FR-A- 1 193 429    FR-A- 1 522 053
FR-A- 2 049 650    FR-A- 2 108 370
GB-A- 1 176 607    US-A- 3 062 241
US-A- 4 273 160    US-A- 4 343 333
US-A- 4 384 595    US-A- 4 452 279
US-A- 4 567 917

(73) Titulaire: **TECALEMIT FLEXIBLES S.A.**
**165, Avenue de Châteaudun B.P. 815**
**F-41008 Blois Cédex(FR)**

(72) Inventeur: **Berlincourt, Yves**
**3, Retour du Petit Remenier**
**F-41000 Blois(FR)**
Inventeur: **Mouchot, Alain**
**Le Bois de Louye**
**F-41700 Cheverny(FR)**

(74) Mandataire: **Derambure, Christian**
**Cabinet Bouju Derambure (Bugnion) S.A. 55,**
**rue Boissonade**
**F-75014 Paris(FR)**

Rank Xerox (UK) Business Services

## Description

La présente invention concerne un nouveau tuyau flexible à très haute performance en pression et endurance dynamique renforcé par des fils de fibres synthétiques destiné à véhiculer des carburants, des gaz, des fluides hydrauliques, notamment.

On connaît déjà des tuyaux flexibles qui sont destinés à être utilisés sous des pressions élevées et qui comportent un tube recouvert d'un élément cylindrique externe axial obtenu par tressage de plusieurs fils. Chaque ensemble de fils est déposé en spirale sur le tube. Le tressage est effectué avec des fils métalliques de 0,3 à 0,6 mm de diamètre, par exemple. Cependant en utilisation à très haute pression, ces fils métalliques, du fait qu'ils sont déposés en spirale sur le tube par tressage, subissent des flexions alternées qui peuvent entraîner la rupture des fils. En outre, le tressage provoquant une pliure des fils peut entraîner aussi la cassure des fils et une perforation du tube intérieur, on préférera procéder à un nappage de fils superposés.

Pour que la résistance du tuyau flexible soit grande pour un transport de fluides sous haute pression, on a cherché à ce que l'élément tressé comporte le moins de vide possible entre les nappes de fils métalliques tréssés. Les nappes de fils d'acier coplanaires ne permettent pas un remplissage suffisant et il subsiste des trous et des vides entre deux nappes contigües, ce qui a pour effet de diminuer la résistance du flexible pour des pressions élevées. Des améliorations ont été apportées au tressage classique de fils d'acier en nappes coplanaires et on a tréssé des paquets de fils fins non coplanaires pour obtenir un meilleur remplissage (brevet français N° 1 522 053). Mais ces flexibles ainsi obtenus sont lourds, car la quantité de matière rapportée sur le tube central est plus importante par tressage de paquets de fils fins que par tressage de nappes de fils.

Le brevet US-A-4 273 160 décrit un tuyau flexible constitué d'un tube interne en matière synthétique recouvert d'au moins une tresse de fils disposés en nappes croisées hélicoîdalement autour du tube interne, chaque nappe étant constituée d'une seule couche de fils en matière synthétique placés côte-à-côte, la tresse comportant des interstices entre les nappes.

L'invention vise à pallier ces inconvénients.

Un premier but de l'invention est de fournir des flexibles comportant un tube central recouvert de fils de fibres synthétiques tressés, ce tressage permettant d'obtenir une surface de revêtement dépourvue d'interstices, de vides entre les fils et donc permettant d'obtenir un flexible très résistant aux hautes pressions.

Un deuxième but de l'invention est de fournir des flexibles ayant une durée de vie importante vis-à-vis des contraintes mécaniques et sans péremption pour les constituants des flexibles.

Un troisième but de l'invention est de fournir des flexibles plus légers que les flexibles connus à résistance égale, qui ne fatiguent pas en flexion alternée, et résistants à la corrosion, à l'abrasion, à la chaleur, aux agressions chimiques, aux rayonnements ultra-violets.

A cet effet, l'invention concerne un tuyau flexible constitué d'un tube interne en matière synthétique recouvert d'au moins une tresse de fils disposés en nappes croisées hélicoïdalement autour du tube interne, chaque nappe étant constituée d'une seule couche de fils en matière synthétique placés côte à côte, caractérisé en ce que le nombre n de fils par nappe, le nombre N de nappes autour du tube interne, le titre t des fils et la tension T avec laquelle ils sont posés sont tels que les fils sont déformés en section droite transversale de sorte que l'espace entre deux nappes voisines de même direction est rempli à au moins 100 %, le volume au repos des fils constitutifs des nappes étant égal ou supérieur au volume de la couche annulaire qu'ils constituent finalement lorsqu'ils sont tressés sur le tube.

De préférence, la matière synthétique est du polyamide aromatique, tel que du KEVLAR ou du TWARON, marques déposées respectivement par les Sociétés Du Pont de Nemours et Enka.

L'invention concerne en outre un procédé de fabrication d'un tel tuyau flexible, tel que défini à la revendication 17.

La description suivante, en regard des dessins annexés à titre d'exemples non limitatifs, permettra de comprendre comment la présente invention peut être mise en pratique.

La figure 1 est une vue en élévation d'une portion de tuyau flexible selon l'invention.

La figure 2 est une vue partielle et agrandie en coupe inclinée d'un flexible de la technique antérieure.

La figure 3 est une vue partielle et agrandie en coupe selon la ligne A-A de la figure 1 d'un flexible selon un premier mode de réalisation de l'invention.

La figure 4 est une vue partielle et agrandie selon la ligne A-A de la figure 1 d'un flexible selon un deuxième mode de réalisation de l'invention.

La figure 5 est une vue en section droite transversale d'un flexible selon l'invention, lors de sa fabrication.

La figure 6 est une vue schématique de la machine pour la mise en oeuvre du procédé de fabrication d'un flexible selon l'invention.

Le flexible 1 selon l'invention est constitué d'au moins un tube interne 2, et d'une armature externe 3 constituée de fils tressés. Chaque tresse 4 est formée de nappes 5 de fils enroulés hélicoïdalement qui se croisent avec des nappes 6 également enroulées hélicoïdalement, les nappes 5, 6 faisant un même angle α dit angle de tressage avec l'axe χχ longitudinal du flexible 1. Si on appelle D le diamètre de tressage (défini comme le diamètre moyen de la tresse ou diamètre de la fibre neutre), S la longueur du pas, on a la relation :

$$tg\ \alpha = \frac{\pi . D}{S}$$

Par ailleurs, si on appelle E la largeur de l'espace 11 réservé à une nappe 5 ou 6 entre deux croisements avec une autre nappe 6 ou 5, et N le nombre total de nappes 5, 6 enroulées autour du tube 2, on a la relation :

$$E = \frac{2\pi D\ cos\ \alpha}{N}$$

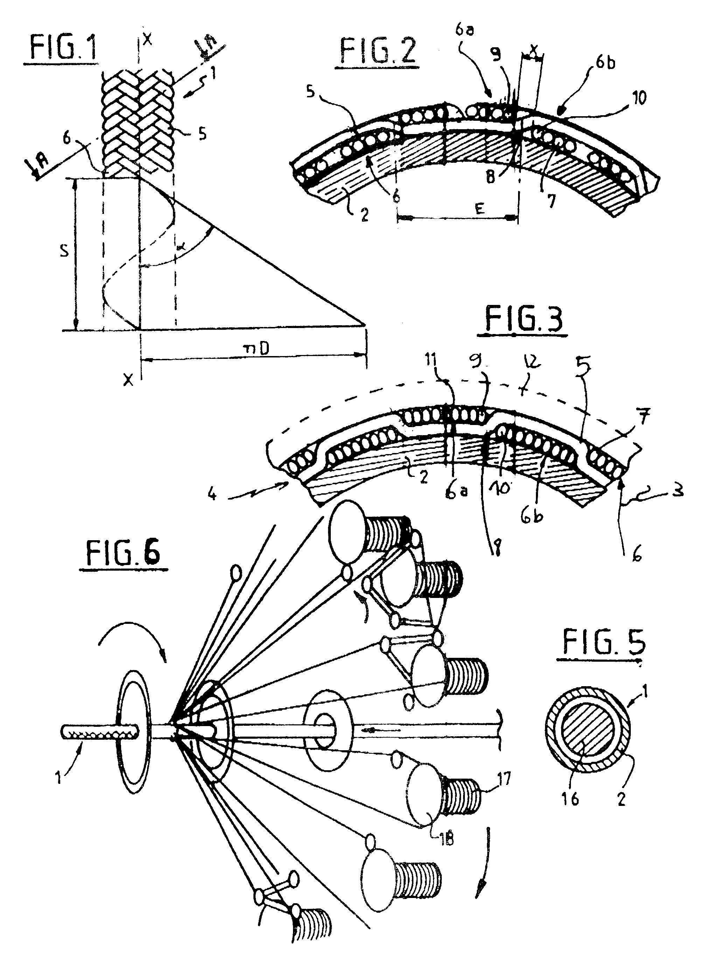

Selon la technique antérieure, on utilise des fils 7 métalliques (figure 2), par exemple en acier c'est-à-dire incompressibles et dont la section droite transversale est et reste circulaire. Ces fils métalliques d'une nappe 5 placés côte à côte dans une même nappe ne peuvent remplir complètement l'espace E laissé par la nappe 6 tressée dans le sens inverse. Ainsi, si chaque nappe 5, 6 est constituée de fils parallèles, côte à côte, il existe toujours un espace 8, d'une largeur x appelée jeu, nécessaire à la souplesse du flexible dans le cas d'utilisation de fils métalliques, entre le dernier fil 9 d'une nappe 6a et le premier fil 10 le plus proche de la nappe voisine de même direction 6b. Le tube interne 2 est donc moins renforcé au niveau de cet espace 8, ou fragilisé.

L'invention consiste donc en la suppression des espaces 8 entre deux nappes 6a, 6b de fils voisins et de même direction sans rigidifier le flexible.

L'invention propose donc un tuyau flexible constitué d'un tube interne 2 en matière synthétique recouvert d'au moins une tresse de fils disposés en nappes 5,6 croisés hélicoïdalement autour du tube interne 2, caractérisé par le fait que les fils 7 sont en matière synthétique et déformés en section droite transversale de sorte que l'espace 8 entre deux nappes 6a, 6b voisines de même direction est rempli à au moins 100%. Cela signifie que le volume au repos des fils constitutifs des nappes est égal ou superieur au volume de la couche annulaire qu'ils constituent finalement lorsqu'ils sont tressés sur le tube. La déformation par compression des fils permet d'obtenir cette propriété.

Dans le premier mode de réalisation représenté sur la figure 3, le nombre n de fils par nappe 5, 6, le nombre N de nappes 5,6 autour du tube interne 2, le titre t des fils 7 et la tension T avec lesquels ils sont posés sont tels que la largeur E de l'espace 11 réservé à une nappe 5,6 de n fils 7 est inférieure à la place normalement nécessitée par ces n fils 7, les n fils 7 étant côte à côte, comprimés les uns contre les autres et aplatis dans une direction sensiblement tangentielle au tube interne 2.

En effet, le titre t des fils 7 correspond à un diamètre moyen d des fils 7, et on a la relation en supposant les fils 7 indéformables de section circulaire :

$$x = E - nd$$

Dans ce premier mode de réalisation de l'invention, on choisit n, N, t (et donc d) de façon que : E - nd < 0. La tension de pose T est donc adaptée pour engendrer la déformation des fils 7 et leur disposition côte à côte comme représentée en figure 3, en évitant toute superposition.

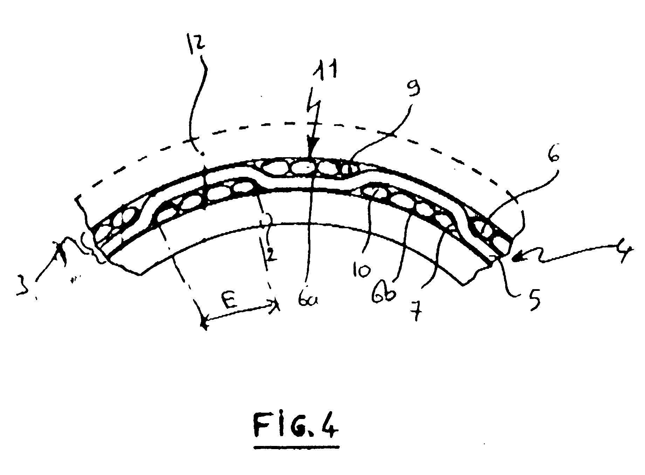

Dans le deuxième mode de réalisation de l'invention représenté en figure 4, le nombre n de fils 7 par nappe 5, 6, le nombre N de nappes 5, 6 autour du tube interne 2, le titre t des fils et la tension T avec laquelle ils sont posés, sont tels que la largeur E de l'espace 11 réservé à une nappe 5, 6 de n fils 7 est supérieure à la place nécessitée par ces n fils 7, les n fils 7 étant aplatis dans une direction sensiblement radiale du tube interne 2 pour remplir à 100 % l'espace 11 laissé aux n fils 7 et l'espace 8 entre deux nappes 6a, 6b voisines de même direction.

Dans ce deuxième mode de réalisation de l'invention, on a :

$$E - nd > 0.$$

Mais la tension de pose T est suffisamment grande pour engendrer la déformation des fils 7 et le remplissage de tout l'espace 11.

Dans tous les cas, chaque fil 7 a une section droite transversale non circulaire, de forme aplatie, notamment sensiblement elliptique.

Une tresse 4 d'un tuyau 1 selon l'invention est constituée de fils placés côte à côte, en nappes, mais déformés transversalement, pour que le dernier fil 9 de la nappe 6a soit côte à côte (c'est-à-dire sans espace vide) avec le premier fil 10 de la nappe voisine de même direction 6b, bien que dans deux plans différents, parallèles, l'un étant placé au-dessus des fils de la nappe 5 tressée en sens inverse, l'autre étant placé au dessous des fils de la nappe 5. Les fils 7 peuvent être suffisamment déformés pour que le dernier fil 9 d'une nappe soit pratiquement superposé au premier fil 10 de la nappe consécutive. Ainsi l'espace entre deux nappes de fils est rempli à plus de 100 %.

Le premier mode de réalisation de l'invention est bien adapté aux cas des tuyaux de diamètre D assez important, par exemple supérieur à 10 mm, et à un nombre n de fils 7 par nappe important, par exemple supérieur à quatre et pouvant aller jusqu'à douze classiquement.

Au contraire, le deuxième mode de réalisation de l'invention est mieux adapté aux cas des tuyaux de diamètre D assez faible, par exemple inférieur à 10 mm et à un nombre n de fils 7 par nappe plus faible, par exemple inférieur ou égal à quatre.

Les fils 7 formant au moins la tresse 4 intérieure au contact du tube interne 2 sont constitués de fibres en matière synthétique, les fils étant retordus pour conférer après filature des fibres une résistance à la rupture importante. En général la résistance maximum à la rupture d'un fil d'acier de 0,3 à 0,6 mm de diamètre est comprise entre 245 et 275 da $N/mm^2$. On utilise selon l'invention, des fils de fibres synthétiques retordues -notamment par un retordage 80s de 80 tours par mètre linéaire-, ayant pour un même diamètre une résistance à la rupture de l'ordre de 280 da $N/mm^2$.

Les libres de matière synthétique sont de préférence des fibres de polyamide aromatique, à fort module d'élasticité, tel que du KEVLAR (marque déposée) de Du Pont de Nemours ou du TWARON (marque déposée) de Enka. Les fibres constituant les fils 7 sont avantageusement imprégnées d'un polymère fluoré dont la fonction est d'établir une liaison chimique et mécanique des fibres.

Le flexible 1 selon l'invention peut être constitué d'un tube creux interne 2 en polytétrafluoroéthylène qui est recouvert ou non, à l'intérieur, d'une couche de carbone pour être conducteur de l'électricité ou non.

De préférence, le tuyau 1 selon l'invention comporte au moins une tresse 4 de fils 7 et des moyens 12 de protection de cette tresse 4 contre les agressions extérieures, notamment mécaniques, thermiques, chimiques et les rayonnements.

Dans une première variante possible, les moyens 12 de protection sont constitués d'un gainage de matière synthétique -notamment de polymère synthétique fluoré- recouvrant la ou le(s) tresse(s) 4. Un tel gainage est parfaitement étanche.

Dans une deuxième variante possible, les moyens 12 de protection sont constitués d'une tresse extérieure de protection disposée autour de la (ou des) tresse(s) de renfort 4. La tresse extérieure 12 de protection est en matière synthétique ayant une grande résistance à l'abrasion, formant isolant thermique et insensible aux rayonnements ultra-violets, notamment en polyamide aromatique tel que le NOMEX (marque déposée) de Dupont de Nemours coloré en une couleur foncée ou réfléchissante pour une meilleure protection contre les ultra-violets. Une matière telle que le NOMEX (marque déposée) procure une excellente protection anti-feu et résiste jusqu'à 200°C. De plus, il est très léger et souple. La tresse extérieure 12 de protection a avantageusement les mêmes caractéristiques que la tresse 4 de renfort, à savoir que les fils sont déformés transversalement pour remplir à 100 % l'espace entre deux nappes voisines de même direction.

Dans une troisième variante possible, le tuyau 1 ne comporte qu'une seule tresse 4 de fils 7 et ces fils 7 sont eux-mêmes constitués ou recouverts d'une matière traitée pour résister aux agressions extérieures pour former moyens 12 de protection.

De préférence, les fils 7 constituant la tresse 4 ou 12 extérieure sont constitués ou recouverts d'une matière non mouillante.

Dans les modes de réalisation représentés de l'invention, une seule tresse 4 de renfort est prévue. On peut cependant prévoir plusieurs telles tresses 4 identiques superposées, elles-mêmes recouvertes de moyens 12 de protection. Par exemple, on peut prévoir deux tresses 4 identiques superposées dont les angles de tressage sont très proches l'un de l'autre et respectivement de 54° et 55°.

L'invention propose aussi un procédé de fabrication d'un tuyau flexible 1 constitué d'un tube interne 2 en matière synthétique, et d'au moins une tresse 4 de fils 7 enroulés en nappes 5, 6 hélicoïdalement autour du tube interne 2, caractérisé en ce que l'on tresse des nappes 5, 6 de fils 7 synthétiques en étirant les fils 7 suffisamment pour déformer leur section droite transversale et les placer côte à côte dans une même nappe, les nappes 6a, 6b voisines de même direction étant placées sans jeu tangentiel.

Dans un procédé de fabrication selon l'invention, on commence par bobiner les fils 7 rassemblés en nappe sur des bobines 17. On enfile ensuite le tube interne 2 sur un mandrin 16, puis on tresse les fils 7 à l'aide de la tresseuse représentée en figure 6, sur laquelle on a placé les bobines 17 de tressage contenant les fils 7 rassemblés en nappe.

Dans un procédé selon l'invention, on effectue donc les étapes suivantes :

a) on bobine préalablement sur des bobines (17) des fils (7) constitués de fibres synthétiques, les fils étant placés côte à côte, en nappes sur chaque bobine.

b) on enfile le tube interne (2) sur un mandrin,

c) on tresse les fils (7) en réglant la tension des fils (7) synthétiques de façon à les étirer et déformer leur section transversale,

d) on tresse les fils (7) synthétiques de façon que chaque dernier fil (9) d'une nappe (6a) soit placé côte à côte avec le premier fil (10) de la nappe (6b) de même direction immédiatement voisine.

Pour fabriquer un tuyau 1 selon le premier mode de réalisation représenté en figure 3, on choisit le nombre N de bobines de tressage 17 de la machine de tressage (qui correspond au nombre N de nappes 5, 6 formant la tresse 4 autour du tube interne 2), le nombre n de fils 7 par nappe 5, 6, le titre t des fils 7 et la tension T des fils 7 lorsqu'on les tresse pour que la largeur E de l'espace 11 réservé à une nappe tressée soit inférieure à la place normalement nécessitée par les n fils 7 de la nappe 5, 6, les n fils 7 restant côte à côte lors du tressage, étant comprimés les uns contre les autres, et aplatis dans une direction sensiblement tangentielle au tube interne 2.

Pour fabriquer un tuyau 1 selon le second mode de réalisation représenté en figure 4, on choisit le nombre N de bobines 17 de tressage (donc de nappes 5, 6 formant la tresse 4 autour du tube interne 2), le nombre n de fils 7 par nappe 5, 6, le titre t des fils 7 et la tension T des fils 7 lorsqu'on les tresse pour que la largeur E de l'espace 11 réservé à une nappe tressée soit supérieure à la place normalement nécessitée par les n fils 7 de la nappe 5, 6, les n fils 7 restant côte à côte lors du tressage, et étant aplatis dans une direction sensiblement radiale au tube interne 2 pour remplir à 100 % l'espace 11 laissé aux n fils 7 et l'espace 8 entre deux nappes 6a, 6b voisines de même direction.

De préférence, l'opération de bobinage des fils 7 rassemblés en nappe sur les bobines 17 de tressage, est effectuée après filage et après avoir conféré aux fils 7 un retordage de type S, notamment de 80 tours par mètre linéaire.

Lors de l'opération de bobinage, on bobine les nappes de fils 7 sur des bobines 17 à flasques 18 dont la fonction est de retenir les fils 7 soumis à une forte tension lorsque l'on effectue le tressage subséquent.

Lors du tressage, la tension T des fils 7 est importante, notamment de l'ordre de 9 à 14 daN. Cette tension T est telle que l'on bloque le tube interne 2 par frettage mécanique. On incruste les fils 7 de tresse dans la surface externe du tube interne 2. De préférence, le diamètre intérieur du tube interne 2 est supérieur au diamètre du mandrin 16, de sorte que le tressage applique le tube 2 sur le mandrin 16. Une telle tensnion T de pose importante permet de diminuer considérablement la variation de la longueur du flexible, lors des sollicitations (pression, température, courbure), d'où une perturbation moindre dans le circuit hydraulique et une meilleure résistance de l'accrochage du raccord sur le flexible.

Avant le bobinage on imprègne les fils d'un polymère fluoré en les trempant dans un bain lors de l'opération de retordage.

On peut aussi revêtir le tube interne 2 de plusieurs tresses 4 superposées dont les angles de tressage sont très proches les uns des autres et proches de l'angle de tressage théorique de 54°44'. De préférence, on réalise une première tresse avec un angle de tressage de 54°, puis une seconde tresse avec un angle de tressage de 55°.

Lorsque les fils 7 ne sont pas eux-mêmes préalablement protégés, on place après le tressage un revêtement protecteur 12 sur la (ou les) tresse-(s). Ce revêtement 12 est soit un gainage placé par extrusion par exemple de polymère synthétique fluoré, soit même une nouvelle tresse en matériau différent des tissus 4 de renfort, par exemple en NOMEX (marque déposée) coloré.

EXEMPLE 1 :

On a réalisé un tuyau flexible en tressant sur un tube interne des fils de 3340 dtex, c'est-à-dire, ayant un diamètre moyen d de 0,47 mm. On a tout d'abord bobiné ces fils par nappe de n = 6 fils, et on a utilisé une machine tresseuse à N = 36 bobines. Le diamètre du tube interne était tel que le diamètre D de la libre neutre était de 19,4 mm. L'angle de tressage α était de 54°44'. La tension de pose T était de 14 daN.

EXEMPLE 2 :

On a réalisé un tuyau flexible en tressant sur un tube interne des fils de 3340 dtex, c'est-à-dire ayant un diamètre moyen d de 0,47 mm. On a tout d'abord bobiné ces fils par nappe de n = 2 fils, et on a utilisé une machine tresseuse à N = 24 bobines. Le diamètre du tube interne était tel que le diamètre D de la fibre neutre était de 8,9 mm. L'angle de tressage α était de 54°44'. La tension de pose T était de 10 daN.

Les flexibles ainsi obtenus résistent alors à des températures comprises entre -55°C et 180°C et sont résistants aux huiles et à l'air, au carburant, par exemple pendant 7 jours à 180°C.

Ces flexibles soumis à une pression de 280 bar à 420 bar, soit une surpression de 50 %, ont une variation de longueur inférieure ou égale à 2%.

**Revendications**

1. Tuyau flexible constitué d'un tube interne (2) en matière synthétique recouvert d'au moins une tresse de fils disposés en nappes (5, 6) croisées hélicoïdalement autour du tube interne (2), chaque nappe (5, 6) étant constituée d'une seule couche de fils en matière synthétique placés côte à côte, caractérisé en ce que le nombre n de fils (7) par nappe (5, 6), le nombre N de nappes (5, 6) autour du tube interne (2), le titre t des fils (7) et la tension T avec laquelle ils sont posés sont tels que les fils sont déformés en section droite transversale de sorte que l'espace (8) entre deux nappes (6a, 6b) voisines de même direction est rempli à au moins 100 %, le volume au repos des fils constitutifs des nappes étant égal ou supérieur au volume de la couche annulaire qu'ils constituent finalement lorsqu'ils sont tressés sur le tube.

2. Tuyau selon la revendication 1, caractérisé en ce que chaque fil (7) a une section droite non circulaire de forme aplatie, notamment sensiblement elliptique.

3. Tuyau selon l'une quelconque des revendications 1 et 2, caractérisé en ce que le nombre n de fils (7) par nappe (5, 6), le nombre N de nappes (5, 6) autour du tube interne (2), le titre t des fils (7) et la tension T avec laquelle ils sont posés sont tels que la largeur E de l'espace (11) réservé à une nappe (5, 6) de n fils (7) est inférieure à la place normalement nécessitée par ces n fils (7), satisfaisant ainsi la relation E-nd <0, où d est le diamètre moyen des fils (7) avant tressage, les n fils (7) étant côte à côte, comprimés les uns contre les autres et aplatis dans une direction sensiblement tangentielle au tube interne (2).

4. Tuyau flexible selon l'une quelconque des revendications 1 et 2, caractérisé en ce que le nombre n de fils (7) par nappes (5, 6), le nombre N de nappes (5, 6) autour du tube interne (2), le titre t de fils et la tension T avec lesquels ils sont posés sont tels que la largeur E de l'espace (11) réservé à une nappe (5, 6) de n fils (7) est supérieure à la place nécessitée par ces n fils (7), satisfaisant ainsi la relation E-nd>0, où d est le diamètre moyen des fils (7) avant tressage, les n fils (7) étant côte à côte et aplatis dans une direction sensiblement radiale du tube interne (2) pour remplir à 100 % l'espace (11) laissé aux n fils (7) et l'espace (8) entre deux nappes (6a, 6b) voisines de même direction.

5. Tuyau flexible selon l'une quelconque des revendications 1 à 4, caractérisé par le fait que les fils formant au moins la tresse intérieure au contact du tube interne (2) sont constitués d'une matière synthétique, notamment un polyamide aromatique à fort module d'élasticité tel que le KEVLAR (marque déposée).

6. Tuyau flexible selon l'une quelconque des revendications 1 à 5, caractérisé par le fait que le tube interne (2) est en polytétrafluoroéthylène.

7. Tuyau flexible selon l'une quelconque des revendications 1 à 6, caractérisé par le fait que les fils (7) sont constitués de fibres synthétiques et retordues, notamment par un retordage de 80 tours par mètre linéaire.

8. Tuyau flexible selon l'une quelconque des revendications 1 à 6, caractérisé par le fait que les fils (7) ont un diamètre de 0,3 à 0,6 mm et une résistance à la rupture de l'ordre de 280 da N/mm$^2$.

9. Tuyau flexible selon l'une quelconque des revendications 1 à 8, caractérisé en ce qu'il comporte au moins une tresse (4) de fils (7) et des moyens (12) de protection de cette tresse (4) contre les agressions extérieures, notamment mécaniques, thermiques, chimiques et les rayonnements.

10. Tuyau selon la revendication 9, caractérisé en ce que les moyens (12) de protection sont constitués d'un gainage de matière synthétique, notamment de polymère synthétique fluoré recouvrant la ou le(s) tresse(s) (4).

11. Tuyau selon la revendication 9, caractérisé en ce que les moyens (12) de protection sont constitués d'une tresse extérieure de protection disposée autour de la (ou des) tresse(s) de renfort (4).

12. Tuyau selon la revendication 11, caractérisé en ce que la tresse extérieure (12) de protection est en matière synthétique ayant une grande résistance à l'abrasion, formant isolant thermique et insensible aux rayonnements ultra-violets, notamment en polyamide aromatique tel que le MOMEX (marque déposée).

13. Tuyau flexible selon la revendication 9, caractérisé en ce qu'il ne comporte qu'une seule tresse (4) de fils (7) et en ce que ces fils (7) sont eux-mêmes constitués ou recouverts d'une matière traitée pour résister aux agressions extérieures pour former moyens (12) de protection.

14. Tuyau flexible selon l'une quelconque des revendications 1 à 13, caractérisé en ce que les fils (7) constituant la tresse (4 ou 12) extérieure sont constitués ou recouverts d'une matière non mouillante.

15. Tuyau flexible selon l'une quelconque des revendications 1 à 14, caractérisé par le fait qu'il comporte deux tresses (4) identiques superposées dont les angles de tressage sont très proches l'un de l'autre et respectivement de 54° et 55°.

16. Tuyau flexible selon l'une quelconque des revendications 1 à 15, caractérisé par le fait que les fibres constituants les fils (7) sont imprégnées d'un polymère fluoré dont la fonction est d'obtenir une liaison chimique et mécanique des fibres.

17. Procédé de fabrication d'un tuyau flexible (1) constitué d'un tube interne (2) en matière synthétique, et d'au moins une tresse (4) de fils (7) enroulés en nappes (5, 6) croisées hélicoïdalement autour du tube interne (2), chaque nappe (5, 6) étant constituée d'une seule couche de fils placés côte à côte, caractérisé en ce que l'on tresse des nappes (5, 6) de fils (7) synthétiques en étirant les fils (7) suffisamment pour déformer leur section droite transversale et les placer côte à côte dans une même nappe, les nappes (6a, 6b) voisines de même direction étant placées sans jeu tangentiel de sorte que l'espace (8) entre deux nappes (6a, 6b) voisines de même direction est rempli à au moins 100 %, le volume au repos des fils constitutifs des nappes étant égal ou supérieur au volume de la couche annulaire qu'ils constituent finalement lorsqu'ils sont tressés sur le tube.

18. Procédé selon la revendication 17, caractérisé en ce qu'on effectue les étapes suivantes :
a) on bobine préalablement sur des bobines (17) des fils (7) constitués de fibres synthétiques, les fils étant placés côte à côte, en nappes sur chaque bobine.
b) on enfile le tube interne (2) sur un mandrin,
c) on tresse les fils (7) en réglant la tension des fils (7) synthétiques de façon à les étirer et déformer leur section transversale,
d) on tresse les fils (7) synthétiques de façon que chaque dernier fil (9) d'une nappe (6a) soit placé côte à côte avec le premier fil (10) de la nappe (6b) de même direction immédiatement voisine.

19. Procédé selon la revendication 18, caractérisé en ce que l'on choisit le nombre N de bobines (17) de tressage, donc de nappes (5,6) formant la tresse (4) autour du tube interne (2), le nombre n de fils (7) par nappe (5, 6), le titre t des fils (7) et la tension T des fils (7) lorsqu'on les tresse pour que la largeur E de l'espace (11) réservé à une nappe tressée soit inférieure à la place normalement nécessitée par les n fils (7) de la nappe (5, 6) satisfaisant ainsi la relation E-nd<0, où d est le diamètre moyen des fils (7) avant tressage, les n fils (7) restant côte à côte lors du tressage, étant comprimés les uns contre les autres et aplatis dans une direction sensiblement tangentielle au tube interne (2).

20. Procédé selon la revendication 18, caractérisé en ce que l'on choisit le nombre N de bobines (17) de tressage, donc de nappes (5, 6) formant la tresse (4) autour du tube interne (<2), le nombre n de fils (7) par nappe (5, 6), le titre t des fils (7) et la tension T des fils (7) lorsqu'on les tresse pour que la largeur E de l'espace (11) réservé à une nappe tressée soit supérieure à la place normalement nécessitée par les n fils (7) de la nappe (5, 6), satisfaisant ainsi la relation E-nd>0, où d est le diamètre moyen des fils (7) avant tressage, les n fils (7) restant côte à côte lors du tressage, et étant aplatis dans une direction sensiblement radiale au tube interne (2) pour remplir à 100 % l'espace (11) laissé aux n fils (7) et l'espace (8) entre deux nappes (6a, 6b) voisines de même direction.

21. Procédé selon l'une quelconque des revendications 18 à 20, caractérisé par le fait qu'on bobine la pluralité de fils (7) après filage et après avoir conféré aux fils (7) un retordage S, notamment de 80 tours par mètre linéaire.

22. Procédé selon l'une quelconque des revendications 18 et 21, caractérisé par le fait qu'on bobine les nappes de fils sur des bobines (17) à flasques (18) dont la fonction est de retenir les fils (17) soumis à une forte tension lorsque l'on effectue le tressage subséquent.

23. Procédé selon l'une quelconque des revendications 18 à 22, caractérisé par le fait qu'avant le bobinage on imprègne les fils d'un polymère fluoré en les trempant dans un bain lors de l'opération de retordage.

24. Procédé selon l'une quelconque des revendications 17 à 23, caractérisé par le fait qu'on effectue plusieurs tresses superposées avec des angles de tressage très proches les uns des autres, notamment une première tresse avec un angle de tressage de 54°, puis une seconde tresse avec un angle de tressage de 55°.

25. Procédé selon l'une quelconque des revendications 17 à 24, caractérisé par le fait qu'on place un revêtement protecteur sur la tresse ou les tresses.

## Claims

1. Flexible pipe composed of an inner tube (2) made of synthetic material covered with at least one braid of wires arranged in sheets (5, 6) lapped helicoidally around the inner tube (2), each sheet (5, 6) being composed of a single layer of wires made of synthetic material placed side by side, characterised in that the number n of wires (7) per sheet (5, 6), the number N of sheets (5, 6) around the inner tube (2), the size t of the wires (7) and the tension T with which they are positioned are such that the wires are deformed in transverse cross-section in such a way that the space (8) between two adjoining sheets (6a, 6b) in the same direction is filled to at least 100%, the volume at rest of the constituent wires of the sheets being equal to or greater than the volume of the annular layer which they constitute ultimately when they are braided onto the tube.

2. Pipe according to Claim 1, characterised in that each wire (7) has a non-circular cross-section of a flat, in particular substantially elliptical, form.

3. Pipe according to any one of Claims 1 and 2, characterised in that the number n of wires (7) per sheet (5, 6), the number N of sheets (5, 6) around the inner tube (2), the size t of the wires (7) and the tension T with which they are positioned are such that the width E of the space (11) reserved for a sheet (5, 6) of n wires (7) is smaller than the space normally required by these n wires (7), thus satisfying the relation E-nd<0, where d is the average diameter of the wires (7) before braiding, the n wires (7) being side by side, pressed against one another and flattened in a direction substantially tangential to the inner tube (2).

4. Flexible pipe according to any one of Claims 1 and 2, characterised in that the number n of wires (7) per sheet (5, 6), the number N of sheets (5, 6) around the inner tube (2), the size t of the wires (7) and the tension T with which they are positioned are such that the width E of the space (11) reserved for a sheet (5, 6) of n wires (7) is greater than the space required by these n wires (7), thus satisfying the relation E-nd>0, where d is the average diameter of the wires (7) before braiding, the n wires (7) being side by side and flattened in a direction substantially radial to the inner tube (2) in order to fill to 100% the space (11) left to n wires (7) and the space (8) between two adjoining sheets (6a, 6b) in the same direction.

5. Flexible pipe according to any one of Claims 1 to 4, characterised by the fact that the wires forming at least the inner braid in contact with the inner tube (2) are composed of a synthetic material, in particular an aromatic polyamide with a high module of elasticity such as KEVLAR (registered trade mark).

6. Flexible pipe according to any one of Claims 1 to 5, characterised by the fact that the inner tube (2) is made of polytetrafluorethylene.

7. Flexible pipe according to any one of Claims 1 to 6, characterised by the fact that the wires (7) are composed of synthetic fibres twisted in particular by 80 turns per metre.

8. Flexible pipe according to any one of claims 1 to 6, characterised by the fact that the wires (7) have a diameter of 0.3 to 0.6 mm and a resistance to rupturing of the order of 280 da N/mm$^2$.

9. Flexible pipe according to any one of claims 1 to 8, characterised in that it comprises at least one braid (4) of wires (7) and means (12) for protecting this braid (4) against external aggressions, in particular mechanical, thermal, chemical, and radiation.

10. Pipe according to Claim 9, characterised in that the protection means (12) comprise a cover of synthetic material, in particular of synthetic fluoro-polymer, covering the braid(s) (4).

11. Pipe according to Claim 9, characterised in that the protection means comprise a protective outer braid arranged around the reinforcement braid(s) (4).

12. Pipe according to Claim 11, characterised in that the protective outer braid (12) is made of a synthetic material having a strong resistance to abrasion, forming a thermal insulator and insensitive to ultra-violet radiation, in particular made of aromatic polyamide such as MOMEX (registered trade mark).

**13.** Flexible pipe according to Claim 9, characterised in that it comprises only a single braid (4) of wires (7) and in that the wires (7) are themselves composed of or covered with a material treated to make it resistant to external aggressions to form protection means (12).

**14.** Flexible pipe according to any one of Claims 1 to 13, characterised in that the wires (7) constituting the outer braid (4 or 12) are composed of or covered with a non-absorptive material.

**15.** Flexible pipe according to any one of Claims 1 to 14, characterised by the fact that it comprises two identical superposed braids (4), the braiding angles of which are very close to one another and 54º and 55º respectively.

**16.** Flexible pipe according to any one of Claims 1 to 15, characterised by the fact that the fibres constituting the wires (7) are impregnated with a fluoro-polymer, the function of which is to obtain a chemical and mechanical bonding of the fibres.

**17.** Method of manufacturing a flexible pipe (1) composed of an inner tube (2) made of synthetic material, and at least one braid (4) of wires (7) wound in sheets (5, 6) lapped helicoidally around the inner tube (2), each sheet (5, 6) being composed of a single layer of wires placed side by side, characterised in that the sheets (5, 6) of synthetic wires (7) are braided by stretching the wires (7) sufficiently to deform their transverse cross section and place them side by side in the same sheet, the adjoining sheets (6a, 6b) in the same direction being placed without tangential play in such a way that the space (8) between two adjoining sheets (6a, 6b) in the same direction is filled to at least 100%, the volume at rest of the constituent wires of the sheets being equal to or greater than the volume of the annular layer which they constitute ultimately when they are braided onto the tube.

**18.** Method according to Claim 17, characterised in that the following steps are undertaken:
a) Wires (7) composed of synthetic fibres are first wound onto bobbins (17), the wires being placed side by side, in sheets on each bobbin.
b) the inner tube (2) is fixed onto a mandrel,
c) the wires (7) are braided, while regulating the tension of the synthetic wires (7) in such a way as to stretch them and deform their transverse section,

d) the synthetic wires (7) are braided in such a way that each last wire (9) of a sheet (6a) is placed side by side with the first wire (10) of the sheet (6b) directly adjoining it in the same direction.

**19.** Method according to Claim 18, characterised in that the number N of braiding bobbins (17), and hence of sheets (5, 6) forming the braid (4) around the inner tube (2), the number t of the wires (7) per sheet (5, 6), the size t of the wires (7) and the tension T of the wires (7) when they are braided are chosen in such a way that the width E of the space (11) reserved for a braided sheet is smaller than the space normally required by these n wires (7) of the sheet (5, 6), thus satisfying the relation E-nd<0, where d is the average diameter of the wires (7) before braiding, the n wires (7) remaining side by side during braiding, being pressed against one another and flattened in a direction substantially tangential to the inner tube (2).

**20.** Method according to Claim 18, characterised in that the number N of braiding bobbing (17), and hence of sheets (5, 6) forming the braid (4) around the inner tube (2), the number t of wires (7) per sheet (5, 6), the size t of the wires (7) and the tension T of the wires (7) when they are braided are chosen in such a way that the width E of the space (11) reserved for a braided sheet is greater than the space normally required by these n wires (7) of the sheet (5, 6), thus satisfying the relation E-nd>0, where d is the average diameter of the wires (7) before braiding, the n wires (7) remaining side by side during braiding, being flattened in a direction substantially radial to the inner tube (2) in order to fill to 100% the space (11) left to the n wires (7) and the space (8) between two adjoining sheets (6a, 6b) in the same direction.

**21.** Method according to any one of Claims 18 to 20, characterised by the fact that the plurality of wires (7) are wound onto bobbins after having been extruded and after a twisting S on the wires (7), in particular of 80 turns per linear metre, having been conferred on them.

**22.** Method according to any one of Claims 18 to 21, characterised by the fact that the sheets of wires are wound onto bobbins (17) with flanges (18), the function of which is to keep the wires subjected to a high tension when the subsequent braiding is effected.

23. Method according to any one of Claims 18 to 22, characterised by the fact that, before they are wound onto bobbins, the wires are impregnated with a fluoro-polymer by soaking them in a bath during the twisting operation.

24. Method according to any one of Claims 17 to 23, characterised by the fact that several superposed braids are effected with braiding angles very close to one another, in particular a first braid with a braiding angle of 54º, then a second braid with a braiding angle of 55º.

25. Method according to any one of Claims 17 to 24, characterised by the fact that a protective coating is placed on the braid(s).

**Patentansprüche**

1. Schlauch, bestehend aus einem Innenschlauch (2) aus synthetischem Material, der von mindestens einem Geflecht aus spiralförmig um den Innenschlauch (2) angebrachten Lagen (5, 6) umhüllt ist, wobei jede Lage (5, 6) aus einer einzigen Schicht aneinanderliegender Fäden aus synthetischem Material besteht, dadurch gekennzeichnet, daß die Anzahl n der Fäden (7), die Anzahl N der Lagen (5, 6) um den Innenschlauch (2), die Feinheit t der Fäden (7) und die Spannung T, mit der sie angebracht sind, derart ausgelegt sind, daß die Fäden in ihrem senkrechten Querschnitt so verformt werden, daß der Zwischenraum (8) zwischen zwei aneinanderliegenden, gleichgerichteten Lagen (6a, 6b) zu 100% ausgefüllt ist, wobei das Volumen bei Ruhelage der die Lagen bildenden Fäden größer oder gleich dem Volumen der ringförmigen Schicht ist, die durch sie gebildet wird, wenn sie um den Schlauch geflochten sind.

2. Schlauch nach Patentanspruch 1, dadurch gekennzeichnet, daß der senkrechte Querschnitt jedes Fadens (7) nicht kreisförmig, sondern flachgedrückt, insbesondere weitgehend elliptisch ist.

3. Schlauch nach einem beliebigen der Patentansprüche 1 oder 2, dadurch gekennzeichnet, daß die Anzahl n der Fäden (7) pro Lage (5, 6), die Anzahl N der Lagen (5, 6) um den Innenschlauch (2), die Feinheit t der Fäden (7) und die Spannung T, mit der sie angebracht sind, derart ausgelegt sind, daß die Breite E des für eine Lage (5, 6) mit n Fäden (7) vorgesehenen Zwischenraumes (11) geringer ist als der normalerweise für diese n Fäden (7) vorgesehene Platz, wodurch die Beziehung E-nd < 0 erfüllt ist, wobei d den mittleren Fadendurchmesser vor der Verflechtung bedeutet und die n aneinanderliegenden Fäden (7) weitgehend tangential zum Innenschlauch (2) gegeneinandergedrückt und flachgepreßt werden.

4. Schlauch nach einem beliebigen der Patentansprüche 1 oder 2, dadurch gekennzeichnet, daß die Anzahl n der Fäden (7) pro Lage (5, 6), die Anzahl N der Lagen (5, 6) um den Innenschlauch (2), die Feinheit t der Fäden (7) und die Spannung T, mit der sie angebracht sind, derart ausgelegt sind, daß die Breite E des für eine Lage (5, 6) mit n Fäden (7) vorgesehenen Zwischenraumes (11) größer ist als der für diese n Fäden (7) erforderliche Platz, wodurch die Beziehung E-nd > 0 erfüllt ist, wobei d den mittleren Fadendurchmesser vor der Verflechtung bedeutet und die n aneinanderliegenden Fäden (7) weitgehend tangential zum Innenschlauch (2) gegeneinandergedrückt und flachgepreßt werden, sodaß der für die n Fäden (7) verbleibenden Zwischenraum (11) sowie der Zwischenraum (8) zwischen zwei aneinanderliegenden, gleichgerichteten Lagen (6a, 6b) zu 100% ausgefüllt wird.

5. Schlauch nach einem beliebigen der Patentansprüche 1 bis 4, dadurch gekennzeichnet, daß zumindest die das innere, den Innenschlauch (2) berührende Geflecht bildenden Fäden aus synthetischem Material, insbesondere aus einem Aramid mit hohem Elastizitätsmodul wie z.B. KEVLAR (eingetragenes Warenzeichen) bestehen.

6. Schlauch nach einem beliebigen der Patentansprüche 1 bis 5, dadurch gekennzeichnet, daß der Innenschlauch aus Polytetrafluorethylen besteht.

7. Schlauch nach einem beliebigen der Patentansprüche 1 bis 6, dadurch gekennzeichnet, daß die Fäden (7) aus synthetischen und verzwirnten Fasern bestehen, wobei die Verzwirnung insbesondere 80 Windungen pro laufenden Meter beträgt.

8. Schlauch nach einem beliebigen der Patentansprüche 1 bis 6, dadurch gekennzeichnet, daß die Fäden (7) einen Durchmesser zwischen 0,3 und 0,6 mm und eine Reißfestigkeit von ca. 280 daN/mm$^2$ aufweisen.

9. Schlauch nach einem beliebigen der Patentansprüche 1 bis 8, dadurch gekennzeichnet, daß er mindestens ein Geflecht (4) aus Fäden (7) sowie Mittel (12) zum Schutz dieses Geflechtes (4) vor äußeren Aggressionen - insbesondere durch mechanische und chemische sowie durch Wärme- und Strahlungsbeanspruchung - besitzt.

10. Schlauch nach Patentanspruch 9, dadurch gekennzeichnet, daß die Mittel (12) zum Schutz des Geflechtes (4) aus einer Hülle aus synthetischem Material, insbesondere synthetischem fluoriertem Polymer besteht, das die Lage(n) des Geflechtes (4) überdeckt.

11. Schlauch nach Patentanspruch 9, dadurch gekennzeichnet, daß die Mittel (12) zum Schutz des Geflechtes (4) aus einem Außengeflecht besteht, das um die Lage(n) des Geflechtes (4) gelegt ist.

12. Schlauch nach Patentanspruch 11, dadurch gekennzeichnet, daß das Außengeflecht (12) aus synthetischem Material mit hoher Reibfestigkeit, Wärmeisolationsfähigkeit und Unempfindlichkeit gegenüber ultravioletter Strahlung, insbesondere aus einem Aramid wie MOMEX (eingetragendes Warenzeichen) besteht.

13. Schlauch nach Patentanspruch 9, dadurch gekennzeichnet, daß er nur eine einziges Geflecht (4) aus Fäden (7) besitzt und daß diese Fäden (7) selbst aus einem Material, das den Umweltbeanspruchungen widersteht, bestehen oder von diesem umhüllt sind und somit Schutzmittel (12) bilden.

14. Schlauch nach einem beliebigen der Patentansprüche 1 bis 13, dadurch gekennzeichnet, daß die das Außengeflecht (4 oder 12) bildenden Fäden (7) aus einem feuchtigkeitsbeständigen Material bestehen oder von diesem umhüllt sind.

15. Schlauch nach einem beliebigen der Patentansprüche 1 bis 14, dadurch gekennzeichnet, daß er zwei identische, übereinanderliegenden Geflechte (4) besitzt, deren Flechtwinkel 54° bzw. 55° betragen und somit sehr nahe beieinanderliegen.

16. Schlauch nach einem beliebigen der Patentansprüche 1 bis 15, dadurch gekennzeichnet, daß die die Fäden (7) bildendend Fasern mit einem fluorierten Polymer imprägniert sind, dessen Aufgabe darin besteht, eine chemische und mechanische Verbindung zwischen den Fasern herzustellen.

17. Fertigungsverfahren für einen Schlauch (1), bestehend aus einem Innenschlauch (2) aus synthetischem Material, der von mindestens einem Geflecht (4) aus spiralförmig um den Innenschlauch (2) angebrachten Lagen (5, 6) aus Fäden (4) umhüllt ist, wobei jede Lage (5, 6) aus einer einzigen Schicht aneinanderliegender Fäden besteht, dadurch gekennzeichnet, daß die Flechtung der Lagen (5,6) aus synthetischen Fäden (7) durch Streckziehen der Fäden erfolgt, bis diese in ihrem senkrechten Querschnitt so verformt werden, daS der Zwischenraum (8) zwischen zwei aneinanderliegenden, gleichgerichteten Lagen (6a, 6b) zu 100% ausgefüllt ist, wobei das Volumen bei Ruhelage der die Lagen bildenden Fäden größer oder gleich dem Volumen der ringförmigen Schicht ist, die durch sie gebildet wird, wenn sie um den Schlauch geflochten sind.

18. Verfahren nach Patentanspruch 17, dadurch gekennzeichnet, daß folgendermaßen vorgegangen wird:

a) Die aus synthetischen Fasern bestehenden Fäden (7) werden zuvor auf Spulen (17) aufgewickelt, wobei die Fäden auf jeder Spule aneinanderliegend und in Lagen gewickelt sind.

b) Der Innenschlauch wird auf einen Dorn aufgezogen.

c) Die Fäden (7) werden unter Regulierung der Spannung der synthetischen Fäden (7) zu Geweben geflochten, wobei ihr senkrechter Querschnitt durch die Spannung verformt wird.

d) Die synthetischen Fäden (7) werden derart geflochten, daß der jeweils letzte Faden (9) eines Geflechtes (6a) unmittelbar neben dem ersten Faden (10) des in gleicher Richtung unmittelbar danebenliegenden Geflechtes (6b) zu liegen kommt.

19. Verfahren nach Patentanspruch 18, dadurch gekennzeichnet, daß die Anzahl N der Flechtspulen (17) und somit der das Geflecht (4) um den Innenschlauch (2) bildenden Lagen (5,6), die Anzahl n der Fäden (7), die Feinheit t der Fäden (7) und die Spannung T, mit der sie angebracht sind, so gewählt werden, daß die Breite E des für eine Lage (5, 6) mit n Fäden (7) vorgesehenen Zwischenraumes (11) geringer ist als der normalerweise für diese n Fäden (7) vorgesehene Platz, wodurch die Beziehung $E - nd < 0$ erfüllt ist, wobei d den mittleren Fadendurchmesser vor der Verflechtung bedeutet und die n aneinanderliegenden Fäden (7) weitgehend tangential zum Innenschlauch (2) gegeneinandergedrückt und flachgepreßt werden.

**20.** Verfahren nach Patentanspruch 18, dadurch gekennzeichnet, daß die Anzahl N der Flechtspulen (17) und somit der das Geflecht (4) um den Innenschlauch (2) bildenden Lagen (5,6), die Anzahl n der Fäden (7), die Feinheit t der Fäden (7) und die Spannung T, mit der sie angebracht sind, so gewählt werden, daß die Breite E des für eine Lage (5, 6) mit n Fäden (7) vorgesehenen Zwischenraumes (11) größer ist als der für diese n Fäden (7) erforderliche Platz, wodurch die Beziehung E-nd > 0 erfüllt ist, wobei d den mittleren Fadendurchmesser vor der Verflechtung bedeutet und die n aneinanderliegenden Fäden (7) weitgehend tangential zum Innenschlauch (2) gegeneinandergedrückt und flachgepreßt werden, sodaß der für die n Fäden (7) verbleibenden Zwischenraum (11) sowie der Zwischenraum (8) zwischen zwei aneinanderliegenden, gleichgerichteten Lagen (6a, 6b) zu 100% ausgefüllt wird.

**21.** Verfahren nach einem beliebigen der Patentansprüche 18 bis 20, dadurch gekennzeichnet, daß die Mehrzahl der Fäden (7) nach dem Spinnen aufgespult werden und nachdem sie eine Zwirnung S von insbesondere 80 Wicklungen pro laufenden Meter erhalten haben.

**22.** Verfahren nach einem beliebigen der Patentansprüche 18 bis 21, dadurch gekennzeichnet, daß die Fadenlagen auf Spulen (17) mit Flanschen (18) aufgewickelt werden, deren Funktion darin besteht, die einer erhöhten Zugspannung ausgesetzten Fäden bei der nachfolgenden Flechtung zurückzuhalten.

**23.** Verfahren nach einem beliebigen der Patentansprüche 18 bis 22, dadurch gekennzeichnet, daß die Fäden vor der Aufwicklung durch Eintauchen der Fäden in ein Bad bei deren Zwirnung mit einem fluorierten Polymer imprägniert werden.

**24.** Verfahren nach einem beliebigen der Patentansprüche 18 bis 23, dadurch gekennzeichnet, daß mehrere Lagen übereinanderliegender Geflechte erstellt werden, wobei die Flechtwinkel sehr nahe beieinanderliegen, insbesondere mit 54° bei der ersten und 55° bei der nachfolgenden Geflechtlage.

**25.** Verfahren nach einem beliebigen der Patentansprüche 18 bis 24, dadurch gekennzeichnet, daß das bzw. die Geflechte mit einer Schutzschicht überzogen werden.

FIG.1

FIG.2

FIG.3

FIG.6

FIG.5

FIG.4